# EUROPÄISCHE PATENTSCHRIFT

(11) **EP 2 617 615 B1**
(45) Veröffentlichungstag und Bekanntmachung des Hinweises auf die Patenterteilung: **11.01.2017**
(21) Anmeldenummer: 12176976.4
(22) Anmeldetag: 18.07.2012
(51) Int. Cl.: B60T 13/26, B60T 17/04

(54) **Pneumatische Anhängerbremsanlage**
Pneumatic trailer braking assembly
Installation de freinage pneumatique d'une remorque

(30) Priorität: 19.01.2012 DE 102012100402
(43) Veröffentlichungstag der Anmeldung: 24.07.2013
(73) Patentinhaber: Haldex Brake Products GmbH, 69123 Heidelberg (DE)
(72) Erfinder: Maltry, Helmut, 69226 Nussloch (DE); Sulzyc, Georg, 68535 Edingen-Neckarhausen (DE)
(74) Vertreter: REHBERG HÜPPE + PARTNER

(56) Entgegenhaltungen:
- DE-A1- 10 310 235
- DE-A1-102008 054 365
- DE-A1-102008 060 912

## Beschreibung

### TECHNISCHES GEBIET DER ERFINDUNG

Die Erfindung vorliegende Erfindung betrifft eine pneumatische Anhängerbremsanlage für ein Nutzfahrzeug. Weiterhin betrifft die Erfindung eine Verwendung einer derartigen pneumatischen Anhängerbremsanlage.

### STAND DER TECHNIK

Bei herkömmlichen Nutzfahrzeugen erfolgt eine Kupplung des Anhängers mit dem Zugfahrzeug über eine mechanische Kupplung, welche mit einem Königszapfen, einer Anhängerdeichsel oder einer beliebigen anderweitigen Kupplungseinrichtung erfolgen kann. Besitzt der Anhänger eine Druckluftbremsanlage, ist zumindest für Anhänger mit einer Höchstgeschwindigkeit von mehr als 25 km/h eine pneumatische Schnittstelle vorzusehen mit einem Kupplungskopf Vorrat, über welchen von dem Zugfahrzeug ein Vorrats- oder Versorgungsdruck an den Anhänger übertragbar ist, sowie einem Kupplungskopf Bremse, über welchen von dem Zugfahrzeug ein Bremssteuerdruck an den Anhänger übermittelt wird. Der Bremssteuerdruck wird in Abhängigkeit einer Betätigung eines Bremspedals durch den Fahrer des Zugfahrzeugs erzeugt und in dem Anhänger als Bremssteuerdruck genutzt, um für den Anhänger eine Anhängerbremskraft zu erzeugen, welche mit der Abbremsung des Zugfahrzeugs und der Betätigung des Bremspedals durch den Fahrer korreliert. Darüber hinaus besitzt in vielen Fällen die Schnittstelle auch eine elektrische Kupplung, bei welcher es sich um einen Einfach- oder Vielfachstecker handelt. Vorzugsweise findet eine elektrische Kupplung in Form einer Steckkupplung nach ISO 7638 Einsatz. Eine derartige Steckkupplung besitzt sieben Pins, nämlich einen Pin 1 für die positive Spannung eines Elektroventils, einen Pin 2 für die positive Spannung für Elektronik, einen Pin 3 für die negative Spannung für die Elektronik, einen Pin 4 für die negative Spannung des Elektroventils, einen Pin 5 für das Signal einer Warneinrichtung, einen Pin 6 für eine Kommunikationsverbindung für CAN_High sowie einen Pin 7 für eine CAN_Low, vgl. ISO 11992-1 und ISO 11992-2. Die Pins der Steckkupplung nach ISO 7368 sind bestimmt zur Übertragung elektrischer Leistung und zur Übertragung von Informationen, welche ausschließlich bestimmt sind für die Bremsfunktionen (einschließlich einer ABS- oder EBS-Regelung und Fahrwerksfunktionen, Lenkfunktionen, die Räder und die Aufhängung betreffende Funktionen, was näher in ISO 11992-2: 2003 mit Änderungsstand 1: 2007 spezifiziert ist). Hierbei besitzen die Bremsfunktionen Priorität, so dass diese sowohl in einem normalen Betriebsmodus als auch einem Notfall-Betriebsmodus aufrechterhalten werden sollen. Die Übertragung der Informationen für die Bremsfunktionen soll nicht verzögert werden durch die Übertragung anderweitiger Informationen. Zusammenfassend ist festzustellen, dass herkömmliche Anhänger zusätzlich zu der mechanischen Kupplung für das Zugfahrzeug üblicherweise mit einer Schnittstelle mit zwei separaten pneumatischen Baueinheiten, nämlich einem Kupplungskopf Bremse sowie einem Kupplungskopf Vorrat, oder mit drei Baueinheiten mit der zusätzlicher elektrischer Steckkupplung ausgestattet sind.

Neuerdings ist eine weitere Schnittstelle entwickelt worden, bei welcher in einer einzigen Kupplungseinheit sowohl ein Vorratsdruckanschluss als auch ein Bremssteuerdruckanschluss als auch eine elektrische Kupplung vorhanden sind. Mittels dieser weiteren Schnittstelle mit Kupplungseinheit kann mit oder nach mechanischer Kupplung des Anhängers mit dem Zugfahrzeug in einem einzigen Arbeitsschritt durch Ankupplung der Kupplungseinheit sowohl die pneumatische Verbindung über den Vorratsdruckanschluss und den Bremssteuerdruckanschluss als auch die elektrische Kupplung erfolgen. Eine derartige Schnittstelle mit Kupplungseinheit wird im englischen Sprachgebrauch auch als electrical/electronic-pneumatic-interfacemodul (EPI-Modul) bezeichnet. Derartige EPI-Module können beispielsweise neben dem Vorratsdruckanschluss und dem Bremssteuerdruckanschluss dreißig elektrische Anschlüsse oder Anschlüsse besitzen, wobei sieben elektrische Anschlüsse den Pins der Steckkupplung nach ISO 7638 entsprechen. Einundzwanzig weitere elektrische Anschlüsse sind bestimmt für eine elektrische Verbindung für weitere Zwecke, wobei hier zwei zusätzliche elektrische Anschlüsse für einen CAN-Bus enthalten sein können. Zwei zusätzliche elektrische Anschlüsse werden für zukünftige Anwendungen vorgehalten. Derartige EPI-Module sind insbesondere bestimmt für den Einsatz in Zügen mit einem Anhänger und einem Zugfahrzeug, in welchen ein automatisches Kupplungssystem und/oder ein automatisches Entkupplungssystem Einsatz findet. Bei diesem soll sowohl die mechanische Kupplung als auch die elektrische und/oder pneumatische Kupplung zwischen Anhänger und Zugfahrzeug nicht unmittelbar manuell von dem Fahrer herbeigeführt werden, sondern automatisiert herbeigeführt werden. Dies erfolgt für viele Ausführungsformen für den automatischen Kupplungsvorgang bewegungsgesteuert durch die rückwärtige Annäherung des Zugfahrzeugs an den Anhänger. Diese Systeme werden im englischen Sprachgebrauch auch als "Fully Automated Coupling Systems", kurz FACS, bezeichnet. Durch den Einsatz automatischer Kupplungseinrichtungen kann es zu einer Erhöhung der Sicherheit, Beschleunigung des Kupplungsvorgangs und Erhöhung des Komforts kommen. Im Idealfall kann das Kuppeln und Entkuppeln zwischen Anhänger und Zugfahrzeug erfolgen, ohne dass der Fahrer die Kabine des Zugfahrzeugs zwingend verlassen muss.

Eine Schnittstelle für einen gleichzeitigen Anschluss der elektrischen und pneumatischen Anschlüsse für ein Kuppeln eines Anhängers mit einem Zugfahrzeug ist in der Offenlegungsschrift DE 10 2008 054 365 A1 offenbart.

### AUFGABE DER ERFINDUNG

Der Erfindung liegt die Aufgabe zugrunde, eine pneumatische Anhängerbremsanlage für ein Nutzfahrzeug vorzuschlagen, welches multifunktional einsetzbar ist. Weiterhin liegt der Erfindung die Aufgabe zugrunde, eine verbesserte pneumatische Anhängerbremsanlage vorzuschlagen.

### LÖSUNG

Die Aufgabe der Erfindung wird erfindungsgemäß mit den Merkmalen des unabhängigen Patentanspruchs 1 gelöst. Weitere erfindungsgemäße Ausgestaltungen ergeben sich entsprechend den abhängigen Patentansprüchen 2 bis 12. Eine weitere Lösung der der Erfindung zugrunde liegenden Aufgabe ist gegeben durch eine Verwendung gemäß Patentanspruch 13.

### BESCHREIBUNG DER ERFINDUNG

Der vorliegenden Erfindung liegt die Erkenntnis zugrunde, dass mit dem Technologiewechsel von der ersten erläuterten Schnittstelle mit einem Kupplungskopf Bremse und einem Kupplungskopf Vorrat zu der weiteren Schnittstelle mit einer einzigen Kupplungseinheit, insbesondere einem EPI-Modul, eine Kupplung eines vorhandenen herkömmlichen Anhängers mit einem beliebigen Zugfahrzeug nicht mehr möglich ist: Verfügt der Anhänger über eine Schnittstelle mit einem Kupplungskopf Vorrat und einem Kupplungskopf Bremse, so ist die Schnittstelle nicht kompatibel mit einem Zugfahrzeug, welches mit der mit der Kupplungseinheit gebildeten Schnittstelle, insbesondere einem EPI-Modul, ausgestattet ist (und umgekehrt). Dieses Problem ist auch deshalb von großer Bedeutung, da die Lebensdauer eines Anhängers in der Regel drei- bis viermal so groß ist wie die der Zugfahrzeuge, so dass davon auszugehen ist, dass auch nach einer sukzessiven Modernisierung der Schnittstellen der Zugfahrzeuge noch viele Jahre Anhänger existieren, welche mit der herkömmlichen Schnittstelle ausgestattet sind. Auch kann der Unternehmer aus ökonomischen Gründen nicht mit dem Ankauf von Zugfahrzeugen mit modernen Schnittstellen einen kompletten Austausch der vorhandenen Anhänger mit herkömmlichen Schnittstellen vornehmen.

Die Erfindung schlägt auf Grundlage dieser Erkenntnis vor, dass an einem Anhänger nicht lediglich eine Schnittstelle vorgesehen wird, die an sich ausreichend wäre, um die pneumatische Anhängerbremsanlage betreiben zu können. Eine zusätzliche Schnittstelle ist an dem Anhänger vorgesehen, obwohl lediglich eine Schnittstelle nutzbar ist, so dass ein auf den ersten Blick überflüssiger Zusatzaufwand getrieben wird.

Allerdings werden erfindungsgemäß die beiden Schnittstellen unterschiedlich gestaltet: Eine Schnittstelle (im folgenden auch "*erste Schnittstelle*" genannt) ist mit dem Kupplungskopf Vorrat sowie dem Kupplungskopf Bremse gebildet, so dass diese Schnittstelle die Kupplung des Anhängers mit einem Zugfahrzeug konventioneller Bauart mit entsprechenden Gegen-Kupplungsköpfen Vorrat und Bremse des Zugfahrzeugs geeignet ist. Darüber hinaus besitzt derselbe Anhänger eine weitere Schnittstelle (im Folgenden auch "*zweite Schnittstelle*" oder "*weitere Schnittstelle*" genannt), die mit der Kupplungseinheit gebildet ist, insbesondere mit dem EPI-Modul. Über die weitere Schnittstelle kann dann der Anhänger auch mit einem Zugfahrzeug gekuppelt werden, welches nicht mit Gegen-Kupplungsköpfen Vorrat und Bremse ausgestattet ist, sondern mit einer Gegen-Kupplungseinheit, insbesondere einem EPI-Modul. Letztendlich gewährleistet somit die erfindungsgemäße Ausgestaltung der pneumatischen Anhängerbremsanlage mit zwei Schnittstellen, dass ein- und derselbe Anhänger wahlweise mit Zugfahrzeugen gekuppelt und bewegt werden kann, die Schnittstellen unterschiedlicher Bauart oder "Generationen" aufweisen.

Ohne dass zwingend bei der Kupplung von Zugfahrzeug und Anhänger über die weitere Schnittstelle mit Kupplungseinheit eine automatische Kupplungseinrichtung Einsatz finden muss, ermöglicht die Erfindung auch, dass der Anhänger wahlweise
- nicht automatisch angekuppelt wird mit Kupplung über die Kupplungsköpfe Vorrat und Bremse oder
- automatisch angekuppelt wird mit Nutzung der weiteren Schnittstelle mit der Kupplungseinheit.

Möglich ist, dass die erste Schnittstelle ausschließlich mit dem Kupplungskopf Vorrat und dem Kupplungskopf Bremse gebildet ist, ohne dass zusätzlich eine elektrische Kupplung erfolgt. In weiterer Ausgestaltung der Erfindung findet allerdings in der ersten Schnittstelle auch eine (separat von den Kupplungsköpfen ausgebildete) elektrische Kupplung Einsatz, bei welcher es sich um einen Einfach- oder Vielfachstecker handeln kann, insbesondere eine Steckkupplüng nach ISO 7638.

Vorzugsweise ist auch in die Kupplungseinheit der weiteren oder zweiten Schnittstelle mindestens ein elektrischer Anschluss integriert. Vorzugsweise ist die Kupplungseinheit als EPI-Modul ausgebildet mit den eingangs erläuterten elektrischen Polen oder elektrischen Anschlüssen.

Ein weiterer Aspekt der Erfindung widmet sich der weiteren Verarbeitung der pneumatischen Drücke, nämlich des Vorrats- oder Versorgungsdrucks und/oder des Bremssteuerdrucks, welche über die beiden Schnittstellen an den Anhänger übertragen werden können. Durchaus möglich ist, dass in der pneumatischen Anhängerbremsanlage die pneumatischen Signale, welche über die beiden Schnittstellen alternativ übertragbar sind, auf zumindest teilweise parallelen pneumatischen Übertragungswegen zu den Anhängerbremsen verarbeitet werden. Für eine besondere Ausgestaltung der Erfindung ist aber in der pneumatischen Anhängerbremsanlage lediglich eine zentrale Vorratsleitung angeordnet, von welcher die weitere Verarbeitung des Vorratsdrucks mit pneumatischen Bauelementen und Kreisen ermöglicht, wie dies für pneumatische Anhängerbremsanlagen an sich bekannt ist, welche lediglich über eine der genannten Schnittstellen verfügen. Die genannte zentrale Vorratsleitung ist über mindestens ein Ventil (alternativ) mit dem Kupplungskopf Vorrat der ersten Schnittstelle oder dem Vorratsanschluss der weiteren Schnittstelle, insbesondere des EPI-Moduls, verbindbar, so dass je nach verwendeter Schnittstelle für die pneumatische Kupplung des Zugfahrzeugs mit dem Anhänger und je nach hieran angepasster Schaltstellung des mindestens einen Ventils immer die zentrale Vorratsleitung mit Vorratsdruck versorgt werden kann.

Entsprechend kann eine zentrale Bremssteuerleitung vorhanden sein, über welche mit an sich bekannten pneumatischen Bauelementen und Kreisen die weitere Verarbeitung des Bremssteuerdrucks erfolgen kann. Über ein Ventil ist (alternativ) die zentrale Bremssteuerleitung mit den Schnittstellen, nämlich mit dem Kupplungskopf Bremse der ersten Schnittstelle oder dem Bremssteuerdruckanschluss der weiteren Schnittstelle, verbindbar. Während möglich ist, dass für die Beaufschlagung der zentralen Vorratsleitung einerseits und die zentrale Bremssteuerleitung jeweils ein Ventil Einsatz finden, ist durchaus auch möglich, dass dies über ein gemeinsames Ventil erfolgt.

Für die Steuerung des mindestens einen Ventils, also letztendlich die Steuerung der Verbindung der zentralen Vorratsleitung und der zentralen Bremssteuerleitung mit den Schnittstellen, kann eine beliebige Steuerung, beispielsweise auch die elektrische Steuerung mit mindestens einem Magnetventil, welches durch eine Steuereinheit angesteuert wird, Einsatz finden. Eine besonders einfache, aber dennoch zuverlässige erfindungsgemäße Ausgestaltung ist gegeben, wenn das oder mindestens ein Ventil pneumatisch umschaltbar ist. Hierbei kann als pneumatischer Steuerdruck unmittelbar der Druck übermittelt und verwendet werden, welcher an einer der Schnittstellen anliegt. Um lediglich ein Beispiel zu nennen, kann als Steuerdruck der Steuerdruck an einem Kupplungskopf der ersten Schnittstelle verwendet werden. Erfolgt die Kupplung zwischen Anhänger und Zugfahrzeug über die erste Schnittstelle, liegt an dem Kupplungskopf Vorrat ein Druck an, welcher als Steuerdruck verwendet werden kann, während für die Kupplung über die weitere Schnittstelle der Kupplungskopf Vorrat der ersten Schnittstelle nicht druckbeaufschlagt ist, so dass dann der Steuerdruck Null ist.

Für das mindestens eine Ventil kann ein Ventil mit beliebiger Zahl der Stellungen und beliebiger Zahl der Anschlüsse eingesetzt werden. Hierbei kann das Ventil auch in beliebiger Bauform ausgebildet sein, insbesondere als Sitzventil oder Ventil in Schieberbauweise. Eine besonders einfache Ausgestaltung der Erfindung ist gegeben, wenn ein Ventil als Wechselventil ausgebildet ist. Derartige Wechselventile zeichnen sich durch eine große Zuverlässigkeit aus, wobei diese als Standardbauteil zu geringen Kosten verfügbar sind.

Beispielsweise kann ein erster Eingang des Wechselventils mit dem Kupplungskopf Vorrat der ersten Schnittstelle verbunden sein, während ein zweiter Eingang des Wechselventils mit dem Vorratsanschluss der zweiten Schnittstelle verbunden ist und der Ausgang des Wechselventils mit der zentralen Vorratsleitung verbunden ist. In diesem Fall leitet das Wechselventil den Vorratsdruck an der Schnittstelle zu der zentralen Vorratsleitung, welche für die pneumatische Kupplung zwischen Anhänger und Zugfahrzeug genutzt wird, durch.

Entsprechendes kann für ein Wechselventil gelten, dessen erster Eingang mit dem Kupplungskopf Bremse, zweiter Eingang mit dem Bremssteuerdruckanschluss und Ausgang mit der zentralen Bremssteuerleitung verbunden ist.

Unter Umständen ermöglichen die unterschiedlichen beiden Schnittstellen die Zuführung mindestens eines elektrischen Signals wahlweise über die elektrische Kupplung der ersten Schnittstelle oder mindestens einen elektrischen Anschluss der weiteren Schnittstelle. Auch hier ist möglich, dass die korrespondierenden elektrischen Signale über eine Art Y-Gate einer zentralen Signalleitung zugeführt werden, welches dann genauso verarbeitet werden kann wie in einer pneumatischen Anhängerbremsanlage, welche lediglich über eine Schnittstelle verfügt. In besonderer Ausgestaltung der Erfindung werden aber die Signale der elektrischen Kupplung der ersten Schnittstelle und des mindestens einen elektrischen Anschlusses der weiteren Schnittstelle einer gemeinsamen Steuereinheit zugeführt, welche hierfür über eine gemeinsame Schnittstelle oder separate elektrische Schnittstellen verfügt. Die Steuereinheit steuert dann weitere elektropneumatische Bauelemente der pneumatischen Anhängerbremsanlage an.

In weiterer Ausgestaltung der Erfindung ist die vorgenannte oder eine dem Anhänger zugeordnete Steuereinheit, bei welcher es sich vorzugsweise um eine singuläre oder verteilte und miteinander kommunizierende Teilsteuereinheiten handeln kann, mit Steuerlogik ausgestattet. Die Steuerlogik ist geeignet ausgebildet, um eine Herstellung der pneumatischen, elektrischen und/oder mechanischen Kopplung zwischen Anhänger und Zugfahrzeug zu erkennen, wobei mindestens eine der vorgenannten Kopplungsarten auch automatisch herbeigeführt sein kann. Erkennt die Steuerlogik, dass eine Herstellung einer derartigen Kopplung zwischen Anhänger und Zugfahrzeug erfolgt ist, überführt die Steuereinheit automatisch das Parkventil in eine Lösestellung, was beispielsweise durch Betätigung eines elektromagnetischen Aktuators, eines Stellantriebs, eines elektromagnetischen Ventils zur Erzeugung eines Drucks zur Überführung des Parkventils in die Lösestellung durch eine pneumatische Kraft u.ä. erfolgen kann. Beispielsweise kann hierzu eine elektrisch angesteuerte Überführung des Parkventils in die Lösestellung genutzt werden, wie diese im Detail in DE 10 2008 060 912 A1 beschrieben ist.

Im Rahmen der vorliegenden Erfindung kann die Erkennung der erfolgten Kopplung durch einen pneumatischen, elektrischen und/oder mechanischen Kopplungssensor erfolgen. Unter Umständen macht die Erfindung auch eine zu den genannten Zwecken dienende Steuereinheit in dem Zugfahrzeug entbehrlich, so dass die Erkennung und die Überführung des Parkventils in die Lösestellung durch die dem Anhänger zugeordnete Steuereinheit allein erfolgt. Möglich ist, dass das erläuterte Erkennen der Kopplung lediglich für eine der erfindungsgemäßen alternativen Schnittstellen erfolgt. Vorzugsweise erfolgt dies aber unabhängig davon, welche der beiden Schnittstellen genutzt ist. Hierfür können geeignete Maßnahmen an den beiden Schnittstellen oder stromabwärts angeordneten elektrischen oder pneumatischen Leitungen erfolgen. Vorzugsweise erfolgt die Erkennung aber durch Maßnahmen, nachdem die beiden elektrischen und/oder pneumatischen Leitungszweige, welche den beiden alternativen Schnittstellen zugeordnet sind, zusammengeführt worden sind, also beispielsweise in einer gemeinsamen Steuereinheit, einer gemeinsamen Bremssteuerleitung (insbesondere stromabwärts des Wechselventils) und/oder in einer gemeinsamen Vorratsdruckleitung (insbesondere stromabwärts des Wechselventils).

Grundsätzlich kann die Erkennung der erfolgten Kopplung zwischen Anhänger und Zugfahrzeug auf Grundlage beliebiger Maßnahmen erfolgen. In einer Ausgestaltung der Erfindung erfolgt diese Erkennung auf Basis eines zwischen Zugfahrzeug und Anhänger (über eine der beiden Schnittstellen) übertragenen Vorratsdrucks. Wird beispielsweise ein EPI-Modul oder ein Kupplungskopf Vorrat des Anhängers an das Zugfahrzeug angekuppelt, wird eine Vorratsdruckleitung druckbeaufschlagt, was über einen geeigneten Drucksensor erfasst werden kann und als Indiz für die erfolgte Kopplung ausgewertet werden kann.

Ebenfalls möglich ist, dass ein zwischen Zugfahrzeug und Anhänger übertragener Bremssteuerdruck als Basis für die Erkennung der Kopplung dient. Dies erfordert neben der pneumatischen Kopplung der Schnittstellen des Zugfahrzeugs und des Anhängers, dass ein Bremssteuerdruck vorliegt. Für diese Ausgestaltung ist es bspw. möglich, dass der Fahrer mit der Betätigung des Bremspedals den Bremssteuerdruck erzeugt, der nur bei gekoppelter Schnittstelle an den Anhänger übertragen werden kann, wo dann nach Erkennung des Bremssteuerdrucks oberhalb eines Schwellwerts die automatische Überführung des Parkventils in die Lösestellung herbeigeführt wird.

Ebenfalls möglich ist, dass die Erkennung der Kopplung auf Grundlage eines zwischen Zugfahrzeug und Anhänger übertragenen elektrischen Signals erfolgt.

Auch ein mechanisches Kopplungssignal, insbesondere auf Grundlage eines mechanischen Kopplungssensors und/oder des Betriebszustands einer mechanischen Kopplungseinrichtung wie beispielsweise einer mechanischen Verriegelung, kann für die Erkennung der erfolgten Kopplung Einsatz finden. Um lediglich ein Beispiel zu nennen, kann ein eine pneumatische Kopplung zwischen Zugfahrzeug und Anhänger erfassender pneumatischer Kopplungssensor Einsatz finden, wie dieser in der nicht vorveröffentlichten Patentanmeldung DE 10 2012 101 501.5 beschrieben ist, wobei in der nicht vorveröffentlichten Patentanmeldung auch eine Ausführungsform dargestellt ist, in welcher ein pneumatischer Kopplungssensor in einen Kupplungskopf integriert ist und ein elektrisches Ausgangssignal erzeugt, welches dann im Rahmen der vorliegenden Erfindung der mit der Steuerlogik ausgestatteten Steuereinheit zugeführt werden kann.

Durchaus möglich ist, dass das automatische Überführen des Parkventils in die Lösestellung nur von der zuvor erläuterten Erkennung der Kopplung abhängig ist. Für eine weitere Ausgestaltung der Erfindung ist das automatische Überführen des Parkventils in die Lösestellung allerdings von (mindestens) einem weiteren durch die Steuerlogik der Steuereinheit ausgewerteten Betriebsparameter abhängig. Beispielsweise kann auf dieser Grundlage vor dem automatischen Überführen des Parkventils in die Lösestellung eine Art "Plausibilitätsprüfung" erfolgen. Insbesondere erfolgt das automatische Überführen des Parkventils in die Lösestellung nicht, wenn erkannt wird, dass der Fahrer sich nicht in einer Fahrerkabine des Zugfahrzeugs befindet. Diese Erkennung kann beispielsweise auf Grundlage eines Fahrersitzbelegungssensors, eines Türstellungssensors o. ä. erfolgen. Ebenfalls möglich ist, dass das automatische Überführen des Parkventils in die Lösestellung nur dann erfolgt, wenn ein Zündschlüssel betätigt ist, insbesondere in die Stellung "Zündung an". Alternativ oder kumulativ kann das automatische Überführen des Parkventils in die Lösestellung davon abhängig gemacht werden, ob als Betriebsparameter erkannt wird, dass der Anhänger auf einer nicht geneigten Fahrbahn steht. Ist hingegen die Fahrbahn geneigt, würde das automatische Überführen des Löseventils in die Lösestellung zur Folge haben, dass sich der Anhänger unkontrolliert in Bewegung setzt. Ebenfalls möglich ist, dass das automatische Überführen des Parkventils in die Lösestellung davon abhängig gemacht wird, dass die Steuerlogik der Steuereinheit erkennt, dass der Druck in einem Vorratsbehälter des Anhängers einen Schwellwert überschritten hat, welcher erforderlich ist, um einen ordnungsgemäßen Betrieb der Anhängerbremsanlage zu gewährleisten. Wird beispielsweise eine Kopplung des Anhängers mit dem Zugfahrzeug erkannt, führt dies für entleerten Behälter des Anhängers dazu, dass der Druck in dem Behälter kontinuierlich steigt. Die automatische Überführung des Parkventils in die Lösestellung erfolgt in diesem Fall erst dann, wenn der Schwellwert des Drucks in dem Behälter überschritten ist.

In besonderer Ausgestaltung der Erfindung ist die Steuereinheit mit Steuerlogik ausgestattet, welche das automatische Überführen des Parkventils in die Lösestellung erst nach Verstreichen einer Zeitspanne nach dem Erkennen der erfolgten Kopplung zwischen Zugfahrzeug und Anhänger veranlasst. Diese Ausgestaltung führt zu einer zeitlichen Trennung des Kopplungsvorgangs von dem Lösen der Parkbremse. Dies ist beispielsweise von Vorteil, wenn der Fahrer des Zugfahrzeugs mit der automatischen Kopplung des Anhängers mit dem Zugfahrzeug zunächst beschäftigt ist, was seine volle Aufmerksamkeit erfordert, beispielsweise für die Steuerung der Geschwindigkeit der Rückwärtsfahrt für die Annäherung des Zugfahrzeugs an den Anhänger und/oder die geeigneten Lenkbewegungen und/oder das Treffen geeigneter Kopplungsmaßnahmen. Die erfindungsgemäße Zeitspanne vor dem Überführen des Parkventils in die Lösestellung kann der Fahrer dazu nutzen, den Kopplungsvorgang zu vollenden oder lediglich die Aufmerksamkeit von dem durchgeführten Kopplungsvorgang weg zu lenken, um dann für das automatische Überführen des Parkventils in die Lösestellung vorbereitet zu sein, womit dann auch entsprechende Aktionen wie die Abbremsung des Anhängers über die Betriebsbremse möglich sind.

Die Erfindung umfasst auch eine Ausführungsform, bei welcher nach dem automatischen Überführen des Parkventils in die Lösestellung weitere Aktionen wie das Verhindern eines Losrollen des Zugs aus Anhänger und Zugfahrzeug oder aber das gezielte Losfahren dem Fahrer überlassen sind. In weiterer Ausgestaltung der Erfindung wird aber vorgeschlagen, dass die Steuerlogik der Steuereinheit auch nach automatischer Überführung des Parkventils in die Lösestellung noch tätig wird. Dies erfolgt durch Überwachung des Betriebszustands des Anhängers. Erkennt die Steuerlogik einen unerwünschten Betriebszustand des Anhängers, führt diese eine automatische Rückführung des Parkventils in die Parkstellung herbei. Wird beispielsweise mit dem automatischen Überführen des Parkventils in die Lösestellung erkannt, dass das Fahrzeug losrollt, ohne dass der Fahrer das Gaspedal betätigt hat oder einen Gang angewählt hat, wird das offensichtlich unerwünschte Losrollen des Anhängers unterbunden durch die automatische Rückführung des Parkventils in die Parkstellung. Entsprechendes kann erfolgen, wenn der Fahrer das Fahrzeug verlässt, was durch Erfassung einer Öffnungsbewegung der Tür oder des Signals eines Sitzbelegungssensors erfolgen kann. Die vorgenannten Beispiele dienen lediglich der Erläuterung für Möglichkeiten einer Erkennung eines unerwünschten Betriebszustands mit hierdurch ausgelöster automatischer Rückführung des Parkventils in die Parkstellung, ohne dass eine Einschränkung der Erfindung auf diese Beispiele erfolgen soll.

Vorzugsweise findet die zuvor erläuterte erfindungsgemäße pneumatische Anhängerbremsanlage Einsatz für einen Anhänger, der über eine, beispielsweise bewegungsgesteuert durch die Rückwärtsfahrbewegung eines Zugfahrzeugs, automatisch betätigbare mechanische, elektrische und/oder pneumatische Kupplungseinrichtung und die weitere Schnittstelle mit einem Zugfahrzeug kuppelbar ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden sein kann, ohne dass es einer expliziten Verwendung des Adverbs "mindestens" bedarf.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in räumlicher Darstellung eine Kupplungseinheit eines Anhängers in Form eines EPI-Moduls mit einem Vorratsdruckanschluss, einem Bremssteuerdruckanschluss, elektrischen Anschlüssen und mechanischen Führungs- und Kupplungselementen für einen Anhänger.
- **Fig. 2**: zeigt eine zu der Kupplungseinheit des Anhängers gemäß Fig. 1 passende Gegen-Kupplungseinheit eines Zugfahrzeugs in räumlicher Darstellung.
- **Fig. 3**: zeigt schematisch einen Teil einer erfindungsgemäßen pneumatischen Anhängerbremsanlage.

### FIGURENBESCHREIBUNG

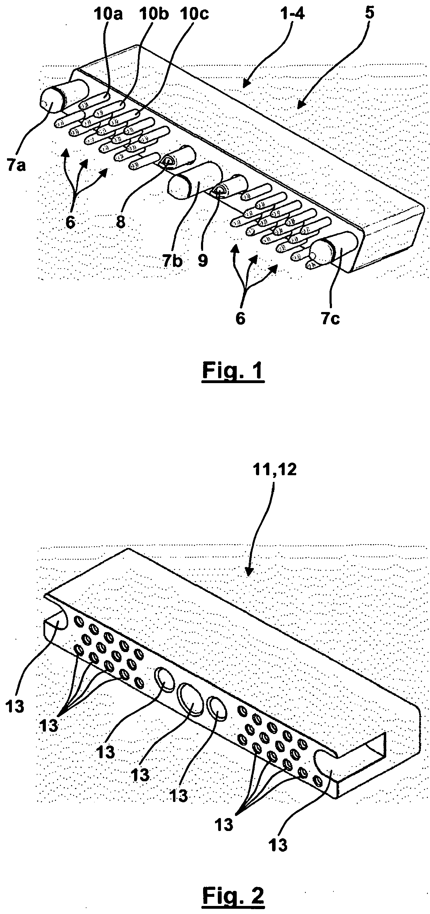

**Fig. 1** zeigt eine Schnittstelle 1, welche mit einer Kupplungseinheit 2 gebildet ist, welche eine singuläre Baueinheit 3 bildet. Hierbei handelt es sich insbesondere um ein EPI-Modul 4. Die Schnittstelle 1 ist an anderer Stelle auch als "zweite Schnittstelle" oder "weitere Schnittstelle" in Abgrenzung zu der "ersten Schnittstelle" bezeichnet. Die Kupplungseinheit 2 ist in der Art eines Steckers 5 ausgebildet mit parallel zu einander orientierten Steckelementen 6, welche sämtlich auf einer Seite der Kupplungseinheit 2 angeordnet sind.

Bei der Kupplungseinheit 2 sind drei Steckelemente 6 als mechanische Führungs- und Kupplungselemente 7a, 7b, 7c ausgebildet, wobei die Führungs- und Kupplungselemente 7a, 7c randseitig angeordnet sind, während das Führungs- und Kupplungselement 7b mittig angeordnet ist. Die Führungs- und Kupplungselemente 7 sind zylinderförmig ausgebildet mit einer halbkugelförmigen, kegelförmigen oder konvexen Stirnseite. Weitere Steckelemente 6 sind als Vorratsdruckanschluss 8 und Bremssteuerdruckanschluss 9 ausgebildet, wobei für das dargestellte Ausführungsbeispiel der Vorratsdruckanschluss 8 und der Bremssteuerdruckanschluss 9 beidseits des Führungs- und Kupplungselements 7b und benachbart zu diesem angeordnet sind.

Weitere dreißig Steckelemente 6 sind als elektrische Pole oder elektrische Anschlüsse10a, 10b, ... ausgebildet, wobei fünfzehn elektrische Anschlüsse 10 zwischen dem Führungs- und Kupplungselement 7a und dem Vorratsdruckanschluss 8 und fünfzehn weitere elektrische Anschlüsse 10 zwischen dem Bremssteuerdruckanschluss 9 und dem Führungs- und Kupplungselement 7c angeordnet sind.

Die folgende Tabelle zeigt eine beispielhafte Ausbildung und Belegung der elektrische Anschlüsse 10:

| **Laufende Nr. Anschluss 10** | **Fläche in mm²** | **Norm** | **Funktion** |
|---|---|---|---|
| 10-1 | 4 (6) | ISO 7638 Anschluss 1 | ABS/EBS plus Elektroventil |
| 10-2 | 1,5 | ISO 7638 Anschluss 2 | ABS/EBS plus Elektronik |
| 10-3 | 1,5 | ISO 7638 Anschluss 3 | ABS/EBS minus Elektronik |
| 10-4 | 4 (6) | ISO 7638 Anschluss 4 | ABS/EBS minus Elektronik |
| 10-5 | 1,5 | ISO 7638 Anschluss 5 | ABS/EBS Warneinrichtung |
| 10-6 | 1,5 | ISO 7638 Anschluss 6 | ABS/EBS CAN_High entsprechend ISO 11992-1 und 11992-2 für einen Datenaustausch der Bremssysteme und des Fahrwerks |
| 10-7 | 1,5 | ISO 7638 Anschluss 7 | ABS/EBS CAN_Low entsprechend ISO 11992-1 und 11992-2 für einen Datenaustausch der Bremssysteme und des Fahrwerks |
| 10-8 | 2,5 | - | Elektrischer Stützfuß 2 |
| 10-9 | 1,5 | - | Zündung 24V |
| 10-10 | 1,5 | ISO 12098 Anschluss 10 | Sensierende Einrichtung mit gemeinsamer Rückführung |
| 10-11 | 2,5 | - | Elektrischer Stützfuß 1 |
| 10-12 | 1,5 | - | Kamera 2 |
| 10-13 | 1,5 | ISO 12098 Anschluss 11 | Start-Traktions-Steuersystem |
| 10-14 | 1,5 | - | erste Kamera |
| 10-15 | 1,5 | - | Frei |
| 10-16 | 1,5 | ISO 12098 Anschluss 15 | CAN_Low entsprechend ISO 11992-1 und 11992-3 für einen Datenaustausch mit anderen Einrichtungen als die Bremssysteme und das Fahrwerk |
| 10-17 | 1,5 | ISO 12098 Anschluss 6 | Rechte hintere Positionslichter, rechte Markierungslichter und rechte Beleuchtung einer Registrier-Platte oder Anzeigeplatte |
| 10-18 | 6 | - | Rückführung für Anschluss 26 |
| 10-19 | 1,5 | ISO 12098 Anschluss 14 | CAN_High entsprechend ISO 11992-1 und 11992-3 für einen Datenaustausch mit anderen Einrichtungen als die Bremssysteme und das Fahrwerk |
| 10-20 | 1,5 | ISO 12098 Anschluss 5 | Linke hintere Positionslichter, linke Markierungslichter und linke Beleuchtung einer Registrier-Platte oder Anzeigeplatte |
| 10-21 | 6 | ISO 12098 Anschluss 9 | Permanente elektrische Leistungsversorgung für zusätzliche Geräte |
| 10-22 | 1,5 | ISO 12098 Anschluss 3 | Hinteres Nebellicht |
| 10-23 | 2,5 | ISO 12098 Anschluss 13 | Gemeinsame Rückführung für Anschlüsse 16 und 17 |
| 10-24 | 1,5 | ISO 12098 Anschluss 8 | Rückwärtsfahrlicht |
| 10-25 | 1,5 | ISO 12098 Anschluss 1 | Blinker links |
| 10-26 | 2,5 | ISO 12098 Anschluss 4 ISO 12098 Anschluss 4 | Gemeinsame Rückführung für Anschlüsse 18-20, 22-24,27-29 |
| 10-27 | 1,5 | ISO 12098 Anschluss 7 | Bremslichter |
| 10-28 | 1,5 | ISO 12098 Anschluss 2 | Rechter Blinker |
| 10-29 | 1,5 | ISO 12098 Anschluss 12 | Liftachseinrichtung |
| 10-30 | 1,5 | - | Frei |

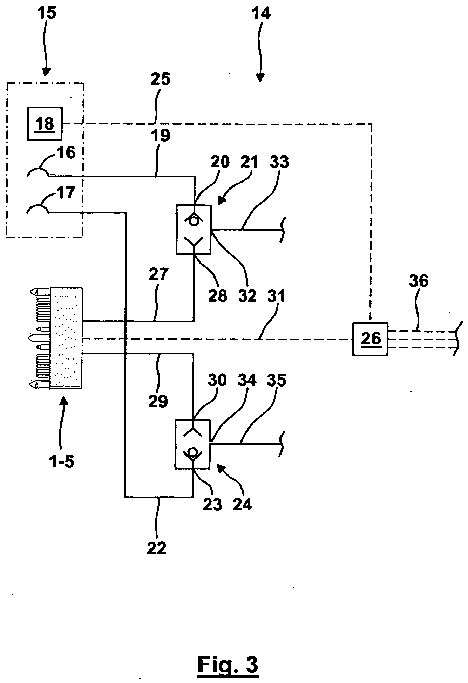

Insbesondere entsprechen die elektrischen Anschlüsse 10-1 bis 10-7 den Anschlüssen einer Steckkupplung gemäß ISO 7638. Der Stecker 5 ist als "männlicher" Stecker ausgebildet mit den hervortretenden Steckelementen 6. Nicht dargestellt sind in Fig. 1 die elektrischen und pneumatischen Eingangs- und Ausgangsleitungen der Kupplungseinheit 2 und der Gegen-Kupplungseinheit 11, über welche diese mit weiteren elektrischen und pneumatischen Bauelementen des Zugfahrzeugs bzw. des Anhängers gekuppelt sind (vgl. hinsichtlich dieser Leitungen der Kupplungseinheit 2 auch Fig. 3).

**Fig. 2** zeigt eine Gegen-Kupplungseinheit 11 eines Zugfahrzeugs in Form eines weiblichen Gegen-Steckers 12. Anstelle der Steckelemente 6 besitzt die Gegen-Kupplungseinheit 11 entsprechende Vertiefungen 13. Die Steckelemente 6 und Vertiefungen 13 treten für Ankuppeln der Kupplungseinheit 2 gemäß Fig. 1 an die Gegenkupplungseinheit 11 gemäß Fig. 2 miteinander in Wechselwirkung, wobei im Bereich der Führungs- und Kupplungselemente 7 der Kupplungseinheit 2 die Vertiefungen 13 der Gegen-Kupplungseinheit 11 eine mechanische Abstützung, Führung und Kupplung gewährleisten. Der Vorratsdruckanschluss 8 und der Bremssteuerdruckanschluss 9 der Kupplungseinheit 2 schaffen mit den zugeordneten Vertiefungen 13 der Gegen-Kupplungseinheit 11 jeweils pneumatische Verbindungen mit einer Abdichtung. Die elektrischen Anschlüsse 10 der Kupplungseinheit 2 führen mit den zugeordneten Vertiefungen 13 der Gegen-Kupplungseinheit 11 elektrische Verbindungen, u. U. ebenfalls unter Abdichtung, herbei. Möglich ist, dass in gekuppeltem Zustand der Kupplungseinheit 2 mit einer Gegen-Kupplungseinheit 11 weitere Bauelemente vorhanden sind oder Maßnahmen getroffen sind, um die Kupplung zu sichern, die Kupplungseinheit 2 und die Gegen-Kupplungseinheit 11 gegen Beschädigungen zu schützen, eine Isolation vorzunehmen, ein Eintritt von Verunreinigungen zu vermeiden u. ä.

**Fig. 3** zeigt exemplarisch und schematisch einen Ausschnitt aus einer erfindungsgemäßen pneumatischen Anhängerbremsanlage 14. Die Anhängerbremsanlage 14 verfügt über zwei Schnittstellen, nämlich die Schnittstelle 1 mit der Kupplungseinheit 2, insbesondere dem EPI-Modul, und eine Schnittstelle 15, die an anderer Stelle auch als "erste Schnittstelle" bezeichnet ist. Die erste Schnittstelle 15 weist einen Kupplungskopf Vorrat 16 und einen Kupplungskopf Bremse 17 in an sich bekannter Bauweise auf. Des Weiteren ist die Schnittstelle 15 auch mit einer elektrischen Kupplung 18, insbesondere einer Steckkupplung nach ISO 7638, ausgestattet. Der Kupplungskopf Vorrat 16, der Kupplungskopf Bremse und die elektrische Kupplung 18 sind als singuläre Baueinheiten ausgebildet. Während gemäß der schematischen Darstellung in Fig. 3 der Kupplungskopf Vorrat 16, der Kupplungskopf Bremse 17 und die elektrische Kupplung 18 benachbart zueinander, aber abseits von der Kupplungseinheit 2 angeordnet sind, können die singulären Bauelemente auch beliebig verteilt sein, so dass beispielsweise auch möglich ist, dass der Kupplungskopf Vorrat 16 und die elektrische Kupplung 18 auf einer Seite der Kupplungseinheit 2 angeordnet sind, während der Kupplungskopf Bremse 17 auf der anderen Seite von der Kupplungseinheit 2 angeordnet ist. Der Kupplungskopf Vorrat ist über eine erste Vorratsleitung 19 mit einem ersten Eingang 20 eines Wechselventils 21 verbunden. Der Kupplungskopf Bremse 17 ist über eine erste Bremssteuerleitung 22 mit einem ersten Eingang 23 eines Wechselventils 24 verbunden. Die elektrische Kupplung 18 ist über eine gestrichelt dargestellte elektrische Signalleitung 25 mit einer Steuereinheit 26 verbunden.

Eine zweite Vorratsleitung 27 führt von der Kupplungseinheit 2 zu einem zweiten Eingang 28 des Wechselventils 21, wobei die zweite Vorratsleitung 27 über den Vorratsdruckanschluss 8 mit einem Vorrats- oder Versorgungsdruck von dem Zugfahrzeug versorgt werden kann. Des Weiteren ist eine zweite Bremssteuerleitung 29 mit einem zweiten Eingang 30 des Wechselventils 24 verbunden, wobei die zweite Bremssteuerleitung 29 über den Bremssteuerdruckanschluss 9 mit dem Bremssteuerdruck des Zugfahrzeugs versorgt werden kann. Schließlich sind die elektrischen Anschlüsse 10 der Kupplungseinheit 2 über eine gestrichelt dargestellte elektrische Signalleitung 31, hier eine Vielfachleitung, mit der Steuereinheit 26 verbunden.

Das Wechselventil 21 besitzt einen Ausgang 32, über den das Wechselventil 21 mit einer zentralen Vorratsleitung 33 verbunden ist. Das Wechselventil 24 besitzt einen Ausgang 34, über den eine zentrale Bremssteuerleitung 35 an das Wechselventil 24 angeschlossen ist. Die Steuereinheit 26 besitzt ausgangsseitige Signalleitungen 36, über welche eine Ansteuerung von elektropneumatischen Bauelementen der Anhängerbremsanlage 14 erfolgen kann oder anderweitige Funktionen gesteuert werden können, vgl. die Funktionen, welche in der Tabelle hinsichtlich der Belegung der elektrischen Anschlüsse 10-1 bis 10-30 angesprochen sind.

Die Funktion der erfindungsgemäßen Anhängerbremsanlage 14 ist wie folgt: Erfolgt die Kupplung des Zugfahrzeugs mit dem Anhänger über die Schnittstelle 15, sind die Kupplungsköpfe 16, 17, die erste Vorratsleitung 19, der erste Eingang 20 sowie bei Bremsbetätigung die erste Bremssteuerleitung 22 und der erste Eingang 23 druckbeaufschlagt. In diesem Fall werden über die Signalleitung 25 Signale an die Steuereinheit 26 übertragen. Hingegen ist die Schnittstelle 1 mit der Kupplungseinheit 2 nicht genutzt, was zur Folge hat, dass die zweite Vorratsleitung 27 und der zweite Eingang 28 sowie die zweite Bremssteuerleitung 29 und der zweite Eingang 30 entlüftet sind. Des Weiteren wird in diesem Fall über die Signalleitung 31 kein Signal übertragen. Folge der alleinigen Beaufschlagung der ersten Eingänge 20, 23 der Wechselventile 21, 24 ist, dass über das Wechselventil 21 die zentrale Vorratsleitung 33 pneumatisch mit dem Kupplungskopf 16 verbunden ist, während die zentrale Bremssteuerleitung 35 über das Wechselventil 24 mit dem Kupplungskopf Bremse 17 pneumatisch verbunden ist. Die Steuereinheit 26 ist geeignet ausgebildet, um in diesem Kupplungsfall ausschließlich die Signale zu verarbeiten, welche von der elektrischen Kupplung 18 über die Signalleitung 25 an die Steuereinheit 26 übertragen werden.

Erfolgt hingegen ausschließlich die Kupplung des Anhängers mit dem Zugfahrzeug über die Schnittstelle 1 mit der Kupplungseinheit 2, sind über die zweite Vorratsleitung 27 und die zweite Bremssteuerleitung 29 die zweiten Eingänge 28, 30 der Wechselventile 21, 34 druckbeaufschlagt, während die ersten Eingänge 20, 23 entlüftet sind, da die Kupplungsköpfe 16, 17 nicht druckbeaufschlagt sind. Des Weiteren erfolgt in diesem Fall die Übertragung von Signalen von der Kupplungseinheit 2 über die Signalleitung 31 zur Steuereinheit 26, die diese Signale verarbeitet, während keine Signale über die Signalleitung 25 zu der Steuereinheit 26 gelangen.

Mit den dargestellten Bauelementen und Verbindungen kann die Druckbeaufschlagung einer einzigen zentralen Vorratsleitung 33 und einer einzigen zentralen Bremssteuerleitung 35 sowie die Beaufschlagung der Signalleitungen 36 unabhängig davon erfolgen, ob die Kupplung zwischen Zugfahrzeug und Anhänger über die Schnittstelle 1 oder die Schnittstelle 15 erfolgt. Somit kann die zentrale Vorratsleitung 33, die zentrale Bremssteuerleitung 35 und die Signalleitung 36 mit weiteren an sich bekannten Bestandteilen von Anhängerbremsanlagen betrieben werden, insbesondere mit einem Löseventil, einem Anhängerbremsventil, einem von der Steuereinheit 26 angesteuerten Modulator, Relaisventilen, einem Parkventil u. ä.

Um lediglich ein Beispiel zu nennen, ermöglicht die vorliegende Erfindung, dass ein mit der zentralen Vorratsleitung 33 verbundenes Löseventil sowohl mit einem Kupplungskopf Vorrat 16 einer Schnittstelle 15 als auch mit einem Vorratsdruckanschluss 8 einer Kupplungseinheit 2 verbindbar ist. Somit kann die Lösefunktion zum Rangieren des Anhängers von dem Benutzer trotz der Ausstattung des Anhängers mit zwei unterschiedlichen Schnittstellen 1, 15 mit einem einzigen Löseventil ausgeführt werden.

Für die weiteren Bestandteile der Anhängerbremsanlage 14, welche in Fig. 3 nicht dargestellt sind, wird beispielsweise (ohne Beschränkung der Erfindung auf diese Ausführungsformen) auf die Aufführungsbeispiele gemäß DE 10 2007 053 764 B4 verwiesen: Die Vorratsleitung 11 gemäß DE 10 2007 053 764 B4 kann der zentralen Vorratsleitung 33 gemäß Fig. 3 entsprechen, während die Bremssteuerleitung 13 gemäß DE 10 2007 053 764 B4 der zentralen Bremssteuerleitung 35 gemäß Fig. 3 entsprechen kann. Sämtliche stromabwärts der genannten Leitungen 11, 13 in DE 10 2007 053 764 B4 angeordneten Bauelemente können dann ohne Veränderungen zu den Bauelementen gemäß Fig. 3 der vorliegenden Anmeldung ergänzt werden. Hierbei ist die erfindungsgemäße Steuereinheit 26 gemäß Fig. 3 in die Regeleinrichtung 6 gemäß DE 10 2007 053 764 B4 integriert.

Möglich ist, dass über die Signalleitung 25, 31 auch die Steuereinheit 26 ein Signal von dem Zugfahrzeug erhält, ob eine Parkbremse aktiviert oder deaktiviert werden soll. Dies kann durch manuelle Betätigung durch den Fahrer in der Kabine des Zugfahrzeugs erfolgen oder im Rahmen eines automatischen Kupplungsvorgangs. Entsprechendes gilt für ein Löseventil.

Des Weiteren möglich ist, dass über die Signalleitung 25, 31 Signale hinsichtlich der ABS- oder EBS-Regelung zwischen Anhänger und Zugfahrzeug übertragen werden.

Hinsichtlich der Bedienung der Parkbremse aus der Kabine des Zugfahrzeugs wird auch auf die diesbezüglichen Lösungen gemäß DE 10 2008 060 912 A1 verwiesen.

Die in Fig. 3 dargestellten Bauelemente können als singuläre Bauelemente ausgebildet sein oder auch teilweise oder sämtlich zu einer Baueinheit oder Baueinheiten kombiniert sein. Um lediglich ein nicht beschränkendes Beispiel zu nennen, können die Wechselventile 21, 24 in die Kupplungseinheit 2 integriert sein, so dass dann die Kupplungseinheit 2 die ersten Eingänge 20, 23 besitzt, über die an diese die Kupplungsköpfe 16, 17 angeschlossen sind, während die Kupplungseinheit 2 dann ausgangsseitig ausschließlich die zentrale Vorratsleitung 33 und die zentrale Bremssteuerleitung 35 besitzt.

Im Rahmen der Erfindung und für die Auslegung der Patentansprüche wird unter die Schnittstelle 15 mit einem Kupplungskopf Vorrat 16, über den ein Vorratsdruck von einem Zugfahrzeug zu dem Anhänger übertragbar ist, und einem Kupplungskopf Bremse 17, über den ein Bremssteuerdruck von dem Zugfahrzeug zu dem Anhänger übertragbar ist, auch ein so genannter Doppelkupplungskopf subsumiert, bei dem der Kupplungskopf Vorrat 16 und der Kupplungskopf Bremse 17 von einer gemeinsamen Baueinheit gebildet sind. Derartige Doppelkupplungsköpfe werden bspw. unter der Kennzeichnung DUOMATIC von dem Unternehmen Wabco vertrieben.

Möglich ist, dass die für die erfindungsgemäßen Zwecke eingesetzte Steuereinheit 26 in eine auch weiteren Zwecken dienende Steuereinheit, insbesondere eine EBS-Steuereinheit integriert ist.

Durch die erfindungsgemäße Ausgestaltung kann evtl. eine zusätzliche elektronische Steuereinheit an dem Zugfahrzeug, über welche unmittelbar oder mittelbar die "Override-Funktion" für das Parkventil, also dessen Überführung in die Lösestellung, veranlasst wird, eingespart werden.

Das automatische Überführen in die Lösestellung kann beispielsweise von der Betätigung des Bremspedals, des Gaspedals u. ä. abhängig gemacht werden.

Die Erfindung kann Einsatz finden für eine rein mechanische automatische Kupplung zwischen Anhänger und Zugfahrzeug, während eine elektrische und/oder pneumatische Kupplung manuell erfolgt. Ebenfalls möglich ist der Einsatz der Erfindung in Verbindung mit einer nicht automatischen mechanischen Kupplung, während entweder automatisch eine elektrische und/oder eine pneumatische Verbindung hergestellt wird. Schließlich ist die Erfindung einsetzbar für ein "fully automatic-coupling-system", bei welchem die automatische Kupplung sowohl der Mechanik als auch der Elektrik als auch der Pneumatik erfolgt.

Möglich ist des Weiteren im Rahmen der vorliegenden Erfindung, dass über mindestens eine Schnittstelle 1,15, insbesondere das EPI-Modul 4, auch eine Kopplung eines Bussystems zwischen Zugfahrzeug und Anhänger erfolgt.

Möglich ist auch, dass geeignete Maßnahmen getroffen sind, um einen Betrieb des aus Zugfahrzeug und Anhänger (oder mehreren Anhängern) gebildeter Zug auch dann zuverlässig zu gewährleisten, wenn sowohl die Schnittstelle 15 als auch die weitere Schnittstelle 1 gekoppelt ist. Beispielsweise kann dann pneumatisch, mechanisch und/oder elektrisch der Kopplung über das EPI-Modul 4 Vorrang eingeräumt werden. Möglich ist auch, dass ausschließlich für die elektrischen Signale und/oder ein Bremssteuersignal einem EPI-Modul 4 Vorrang eingeräumt wird, während die Versorgung mit einem Vorratsdruck über beide Schnittstellen 1, 15 erfolgt, um einen größeren Übertragungsquerschnitt zu gewährleisten. Schließlich ist ebenfalls möglich, dass in diesem Fall die Kopplung über beide Schnittstellen 1, 15 genutzt wird, um redundante pneumatische und/oder elektrische Signale verarbeiten zu können, wenn in einer Schnittstelle 1, 15 oder zugeordneten Leitungen ein Defekt auftritt. Dies kann pneumatisch oder durch eine Steuereinheit automatisiert erkannt werden, womit dann auf die nicht defekte Schnittstelle 1, 15 umgeschaltet werden kann. Möglich ist auch, dass für den Fall, dass erkannt wird, dass beide Schnittstellen 1, 15 gekoppelt sind, der Zug aus Zugfahrzeug und Anhänger automatisch gebremst wird oder die Parkbremse eingelegt bleibt, um dem Fahrer zu signalisieren, dass eine nicht ordnungsgemäße Kopplung über lediglich eine der Schnittstellen 1, 15 erfolgt ist. Alternativ oder zusätzlich kann dem Fahrer ein optisches oder akustisches Warnsignal zur Kenntnis gebracht werden. Entsprechende warnende Maßnahmen können unmittelbar mit dem Koppeln beider Schnittstellen 1, 15 eingeleitet werden. Ebenfalls möglich ist, dass eine derartige warnende Maßnahme gekoppelt ist an das Öffnen der Fahrertür, die Erkennung einer Sitzbelegung. Vorzugsweise wird eine der genannten warnenden Maßnahmen ausgelöst mit dem Starten des Motors, beispielsweise unmittelbar mit der Betätigung der Zündung oder innerhalb von maximal zwei Sekunden nach dem Start des Motors.

Der gleichzeitige Anschluss beider Schnittstellen 1, 15 kann dadurch gewährleistet werden, dass ein Wechselventil Einsatz findet, in welchem das Ventilelement des Wechselventils mit den Drücken der beiden Schnittstellen 1, 15 mit unterschiedlichen Wirkflächen beaufschlagt wird, so dass bei ungefähr gleichen Drücken an beiden Schnittstellen 1, 15 das Wechselventil eine Vorzugsstellung einnimmt, in der insbesondere die mit dem EPI-Modul 4 gebildete Schnittstelle genutzt ist, während die andere Schnittstelle nicht genutzt ist. Ebenfalls möglich ist, dass anstelle des pneumatisch gesteuerten Wechselventils ein elektrisch oder elektropneumatisch geschaltetes Umschaltventil eingesetzt ist, welches je nach anliegendem pneumatischen oder elektrischen Steuersignal eine Verbindung mit einer der Schnittstellen 1, 15 ermöglicht. Hierbei erfolgt die Erkennung und Steuerung durch eine Steuereinheit. Erkennt die Steuereinheit, dass beide Schnittstellen 1, 15 angekuppelt worden sind, steuert die Steuereinheit das mindestens eine Umschaltventil in eine Stellung, in welcher eine Schnittstelle 1, 15, insbesondere die Schnittstelle, welche mit dem EPI-Modul 4 gebildet ist, genutzt wird.

### BEZUGSZEICHENLISTE

- 1: Schnittstelle
- 2: Kupplungseinheit
- 3: Baueinheit
- 4: EPI-Modul
- 5: Stecker
- 6: Steckelemente
- 7: Führungs- und Kupplungselement
- 8: Vorratsdruckanschluss
- 9: Bremssteuerdruckanschluss
- 10: elektrischer Anschluss oder Pol
- 11: Gegen-Kupplungseinheit
- 12: Gegen-Stecker
- 13: Vertiefungen
- 14: Anhängerbremsanlage
- 15: Schnittstelle
- 16: Kupplungskopf Vorrat
- 17: Kupplungskopf Bremse
- 18: elektrische Kupplung
- 19: erste Vorratsleitung
- 20: erster Eingang
- 21: Wechselventil
- 22: erste Bremssteuerleitung
- 23: erster Eingang
- 24: Wechselventil
- 25: Signalleitung
- 26: Steuereinheit
- 27: zweite Vorratsleitung
- 28: zweiter Eingang
- 29: zweite Bremssteuerleitung
- 30: zweiter Eingang
- 31: Signalleitung
- 32: Ausgang
- 33: zentrale Vorratsleitung
- 34: Ausgang
- 35: zentrale Bremssteuerleitung
- 36: Signalleitung

## Patentansprüche

1. Pneumatische Anhängerbremsanlage (14) für ein Nutzfahrzeug mit einer Schnittstelle (15) mit
a) einem Kupplungskopf Vorrat (16), über den ein Vorratsdruck von einem Zugfahrzeug zu dem Anhänger übertragbar ist, und
b) einem Kupplungskopf Bremse (17), über den ein Bremssteuerdruck von dem Zugfahrzeug zu dem Anhänger übertragbar ist,
**dadurch gekennzeichnet, dass**
c) zusätzlich zu der Schnittstelle (15) mit den Kupplungsköpfen (16, 17) eine weitere Schnittstelle (1) mit einer Kupplungseinheit (2) mit einem Vorratsdruckanschluss (8) und einem Bremssteuerdruckanschluss (9) vorhanden ist, und
d) die pneumatische Anhängerbremsanlage (14) wahlweise
da) über die Schnittstelle (15) mit den Kupplungsköpfen (16, 17) oder
db) über die weitere Schnittstelle (1) mit der Kupplungseinheit (2) mit dem Zugfahrzeug kuppelbar ist.

2. Pneumatische Anhängerbremsanlage (14) nach Anspruch 1, **dadurch gekennzeichnet, dass** die Schnittstelle (15) mit dem Kupplungskopf Vorrat (16) und dem Kupplungskopf Bremse (17) auch eine elektrische Kupplung (18) aufweist.

3. Pneumatische Anhängerbremsanlage (14) nach Anspruch 1 oder 2, **dadurch gekennzeichnet, dass** in die Kupplungseinheit (2) der weiteren Schnittstelle (1) auch mindestens ein elektrischer Anschluss (10) integriert ist.

4. Pneumatische Anhängerbremsanlage (14) nach einem der vorhergehenden Ansprüche, **dadurch gekennzeichnet, dass** über mindestens ein Ventil
a) eine zentrale Vorratsleitung (33)
aa) mit dem Kupplungskopf Vorrat (16) der Schnittstelle (15) oder
ab) dem Vorratsdruckanschluss (8) der weiteren Schnittstelle (1) und/oder
b) eine zentrale Bremssteuerleitung (35)
ba) mit dem Kupplungskopf Bremse (17) der Schnittstelle (15) oder
bb) dem Bremssteuerdruckanschluss (9) der weiteren Schnittstelle (1) verbindbar ist.

5. Pneumatische Anhängerbremsanlage (14) nach Anspruch 4, **dadurch gekennzeichnet, dass** das oder mindestens ein Ventil pneumatisch umschaltbar ist.

6. Pneumatische Anhängerbremsanlage (14) nach Anspruch 5, **dadurch gekennzeichnet, dass** das oder mindestens ein Ventil ein Wechselventil (21; 24) ist.

7. Pneumatische Anhängerbremsanlage (14) nach einem der vorhergehenden Ansprüche, **dadurch gekennzeichnet, dass** mindestens ein elektrisches Signal der elektrischen Kupplung (18) der Schnittstelle (15) und mindestens ein elektrisches Signal von mindestens einem elektrischen Anschluss (10) der weiteren Schnittstelle (1) einer gemeinsamen Steuereinheit (26) zugeführt wird.

8. Pneumatische Anhängerbremsanlage (14) nach einem der vorhergehenden Ansprüche, **dadurch gekennzeichnet, dass** die oder eine dem Anhänger zugeordnete Steuereinheit (26) mit Steuerlogik ausgestattet ist, welche
a) eine Herstellung der pneumatischen, elektrischen und/oder mechanischen Kopplung zwischen Anhänger und Zugfahrzeug erkennt und
b) bei Erkennung, dass eine Herstellung der pneumatischen, elektrischen und/oder mechanischen Kopplung zwischen Anhänger und Zugfahrzeug erfolgt ist, automatisch ein Parkventil in eine Lösestellung überführt.

9. Pneumatische Anhängerbremsanlage (14) nach Anspruch 8, **dadurch gekennzeichnet, dass** die Steuerlogik der Steuereinheit (26) auf Basis
a) eines zwischen Zugfahrzeug und Anhänger übertragenen Vorratsdrucks,
b) eines zwischen Zugfahrzeug und Anhänger übertragenen Bremssteuerdrucks,
c) eines zwischen Zugfahrzeug und Anhänger übertragenen elektrischen Signals,
d) eines mechanischen Kopplungssignals,
e) des Betriebszustands einer mechanischen Kopplungseinrichtung,
eine Herstellung der pneumatischen, elektrischen und/oder mechanischen Kopplung zwischen Anhänger und Zugfahrzeug erkennt.

10. Pneumatische Anhängerbremsanlage (14) nach Anspruch 8 oder 9, **dadurch gekennzeichnet, dass** das automatische Überführen des Parkventils in die Lösestellung von mindestens einem weiteren durch die Steuerlogik der Steuereinheit (26) ausgewerteten Betriebsparameter abhängig ist.

11. Pneumatische Anhängerbremsanlage (14) nach Anspruch 10, **dadurch gekennzeichnet, dass** die Steuereinheit (26) mit Steuerlogik ausgestattet ist, welche das automatische Überführen des Parkventils in die Lösestellung erst nach Verstreichen einer Zeitspanne nach der Erkennung der pneumatischen, elektrischen und/oder mechanischen Kopplung zwischen Anhänger und Zugfahrzeug veranlasst.

12. Pneumatische Anhängerbremsanlage (14) nach einem der vorhergehenden Ansprüche 8 bis 11, **dadurch gekennzeichnet, dass** die Steuereinheit (26) mit Steuerlogik ausgestattet ist, die nach automatischer Überführung des Parkventils in die Lösestellung den Betriebszustand des Anhängers überwacht und bei Erkennung eines unerwünschten Betriebszustands des Anhängers eine automatische Rückführung des Parkventils in die Parkstellung herbeiführt.

13. Verwendung der pneumatischen Anhängerbremsanlage (14) nach einem der vorhergehenden Ansprüche für einen Anhänger, der über eine automatische Kupplungseinrichtung und die weitere Schnittstelle (1) mit einem Zugfahrzeug kuppelbar ist.

## Claims

1. Pneumatical trailer brake system (14) for a commercial vehicle comprising an interface (15) with
a) a coupling head supply (16) by which it is possible to transfer a supply pressure from a tractor to the trailer, and
b) a coupling head brake (17) by which it is possible to transfer a brake control pressure from the tractor to the trailer,
**characterised in that**
c) additional to the interface (15) with the coupling heads (16, 17) another interface (1) is provided which comprises a coupling unit (2) having a supply pressure port (8) and a brake control pressure port (9), and
d) the pneumatical trailer brake system (14) is optionally coupleable with the tractor
da) by the interface (15) with the coupling heads (16, 17) or
db) by the other interface (1) comprising the coupling unit (2).

2. Pneumatical trailer brake system (14) of claim 1, **characterised in that** the interface (15) with the coupling head supply (16) and the coupling head brake (17) also comprises an electrical coupling (18).

3. Pneumatical trailer brake system (14) of claim 1 or 2, **characterised in that** also at least one electrical port (10) is integrated into the coupling unit (2) of the other interface (1).

4. Pneumatical trailer brake system (14) of one of the preceding claims, **characterised in that** by at least one valve it is possible to connect
a) a central supply line (33)
aa) to the coupling head supply (16) of the interface (15) or
ab) to the supply pressure port (8) of the other interface (1)
and/or
b) a central brake control line (35)
ba) to the coupling head brake (17) of the interface (15) or
bb) to the brake control pressure port (9) of the other interface (1).

5. Pneumatical trailer brake system (14) of claim 4, **characterised in that** it is possible to pneumatically switch the or at least one valve.

6. Pneumatical trailer brake system (14) of claim 5, **characterised in that** the or at least one valve is a shuttle valve (21; 24).

7. Pneumatical trailer brake system (14) of one of the preceding claims, **characterised in that** at least one electrical signal of the electrical coupling (18) of the interface (15) and at least one electrical signal of at least one electrical port (10) of the other interface (1) is transferred to a common control unit (26).

8. Pneumatical trailer brake system (14) of one of the preceding claims, **characterised in that** the or a control unit (26) associated with the trailer comprises control logic which
a) detects the provision of the pneumatical, electrical and/or mechanical coupling between the trailer and the tractor and
b) when detecting that the pneumatical, electrical and/or mechanical coupling between the tractor and the trailer has been provided automatically transfers a parking valve into a released position.

9. Pneumatical trailer brake system (14) of claim 8, **characterised in that** the control logic of the control unit (26) detects the provision of the pneumatical, electrical and/or mechanical coupling between the tractor and the trailer on the basis of
a) a supply pressure transferred between the tractor and the trailer,
b) a brake control pressure transferred between the tractor and the trailer,
c) an electrical signal transferred between the tractor and the trailer,
d) a mechanical coupling signal,
e) the operating state of a mechanical coupling device.

10. Pneumatical trailer brake system (14) of claim 8 or 9, **characterised in that** the automatic transfer of the parking valve into the released position depends on at least one additional operating parameter processed or evaluated by the control logic of the control unit (26).

11. Pneumatical trailer brake system (14) of claim 10, **characterised in that** the control unit (26) comprises control logic which provides the automatic transfer of the parking valve into the released position after the expiration of a time span after the detection of a pneumatical, electrical and/or mechanical coupling between the tractor and the trailer.

12. Pneumatical trailer brake system (14) of one of the preceding claims 8 to 11, **characterised in that** the control unit (26) comprises control logic which monitors the operating state of the trailer after the automatic transfer of the parking valve into the released position and which automatically returns the parking valve into the parking position when detecting an undesired operating state of the trailer.

13. Use of the pneumatical trailer brake system (14) of one of the preceding claims for a trailer which is coupleable to a tractor by an automatic coupling device and the other interface (1).

## Revendications

1. Système pneumatique de freinage de remorque (14) pour un véhicule utilitaire, équipé d'une interface (15) comprenant
a) une tête d'accouplement de réserve (16) par le biais de laquelle une pression de réserve peut être transmise d'un véhicule de traction à la remorque, et
b) une tête d'accouplement de frein (17) par le biais de laquelle une pression de commande de frein peut être transmise du véhicule de traction à la remorque, **caractérisé en ce que**
c) en plus de l'interface (15) comprenant les têtes d'accouplement (16, 17), il est prévu une autre interface (1) comprenant une unité d'accouplement (2) équipée d'un raccord de pression de réserve (8) et d'un raccord de pression de frein (9), et
d) le système pneumatique de freinage de remorque (14) peut être couplé au véhicule de traction au choix
da) par le biais de l'interface (15) comprenant les têtes d'accouplement (16, 17) ou
db) par le biais de l'autre interface (1) comprenant l'unité d'accouplement (2).

2. Système pneumatique de freinage de remorque (14) selon la revendication 1, **caractérisé en ce que** l'interface (15) comprenant la tête d'accouplement de réserve (16) et la tête d'accouplement de frein (17) comporte également une connexion électrique (18).

3. Système pneumatique de freinage de remorque (14) selon la revendication 1 ou la revendication 2, **caractérisé en ce qu'**au moins un raccordement électrique (10) est également intégré dans l'unité d'accouplement (2) de l'autre interface (1).

4. Système pneumatique de freinage de remorque (14) selon l'une des revendications précédentes, **caractérisé en ce que**, par le biais d'au moins une vanne,
a) une conduite de réserve centrale (33) peut être reliée
aa) à la tête d'accouplement de réserve (16) de l'interface (15) ou
ab) au raccord de pression de réserve (8) de l'autre interface (1)
et/ou
b) une conduite de commande de frein centrale (35) peut être reliée
ba) à la tête d'accouplement de frein (17) de l'interface (15) ou
bb) au raccord de pression de frein (9) de l'autre interface (1).

5. Système pneumatique de freinage de remorque (14) selon la revendication 4, **caractérisé en ce que** la vanne ou au moins une vanne peut être commutée pneumatiquement.

6. Système pneumatique de freinage de remorque (14) selon la revendication 5, **caractérisé en ce que** la vanne ou au moins une vanne est une vanne de sélection (21; 24).

7. Système pneumatique de freinage de remorque (14) selon l'une des revendications précédentes, **caractérisé en ce qu'**au moins un signal électrique de la connexion électrique (18) de l'interface (15) et au moins un signal électrique d'au moins un raccordement électrique (10) de l'autre interface (1) sont envoyés à une unité de commande commune (26).

8. Système pneumatique de freinage de remorque (14) selon l'une des revendications précédentes, **caractérisé en ce que** l'unité ou une unité de commande (26) affectée à la remorque est dotée d'une logique de commande qui
a) détecte l'établissement du couplage pneumatique, électrique et/ou mécanique entre la remorque et le véhicule de traction, et
b) lorsque l'établissement du couplage pneumatique, électrique et/ou mécanique entre la remorque et le véhicule de traction a été détecté, une vanne de stationnement passe automatiquement dans une position de déblocage.

9. Système pneumatique de freinage de remorque (14) selon la revendication 8, **caractérisé en ce que** la logique de commande de l'unité de commande (26) détecte l'établissement du couplage pneumatique, électrique et/ou mécanique entre la remorque et le véhicule de traction sur la base
a) d'une pression de réserve transmise entre le véhicule de traction et la remorque,
b) d'une pression de commande de frein transmise entre le véhicule de traction et la remorque,
c) d'un signal électrique transmis entre le véhicule de traction et la remorque,
d) d'un signal de couplage mécanique,
e) de l'état de fonctionnement d'un dispositif de couplage mécanique.

10. Système pneumatique de freinage de remorque (14) selon la revendication 8 ou la revendication 9, **caractérisé en ce que** le passage automatique de la vanne de stationnement dans la position de déblocage dépend d'au moins un autre paramètre de fonctionnement évalué par la logique de commande de l'unité de commande (26).

11. Système pneumatique de freinage de remorque (14) selon la revendication 10, **caractérisé en ce que** l'unité de commande (26) est équipée d'une logique de commande qui provoque le passage automatique de la vanne de stationnement dans la position de déblocage seulement après l'écoulement d'une période de temps suivant la détection du couplage pneumatique, électrique et/ou mécanique entre la remorque et le véhicule de traction.

12. Système pneumatique de freinage de remorque (14) selon l'une des revendications 8 à 11 précédentes, **caractérisé en ce que** l'unité de commande (26) est équipée d'une logique de commande qui, après le passage automatique de la vanne de stationnement dans la position de déblocage, surveille l'état de fonctionnement de la remorque et, en cas de détection d'un état de fonctionnement indésirable de la remorque, entraîne un retour automatique de la vanne de stationnement dans la position de stationnement.

13. Utilisation du système pneumatique de freinage de remorque (14) selon l'une des revendications précédentes pour une remorque qui peut être couplée par le biais d'un système de couplage automatique et de l'autre interface (1) à un véhicule de traction.
